# EUROPEAN PATENT APPLICATION

(11) **EP 2 778 869 A1**
(43) Date of publication of application: **17.09.2014**
(21) Application number: 13806087.6
(22) Date of filing: 19.06.2013
(51) Int. Cl.: G06F 3/048

(54) **METHOD AND TERMINAL FOR CREATING FOLDER ON USER INTERFACE**

(30) Priority: 20.06.2012 CN 201210204458
(71) Applicant: Huawei Device Co., Ltd., Longgang District Shenzhen Guangdong 518129 (CN)
(72) Inventor: WANG, Quanquan, Shenzhen Guangdong 518129 (CN)
(74) Representative: Goddar, Heinz J.
(86) International application number: PCT/CN2013/077448
(87) International publication number: WO 2013/189286

(57) **Abstract**

Embodiments of the present invention relate to a method and a terminal for creating a folder on a user interface. The method includes: receiving, by a terminal, a multiple-selection operation of a user, where the multiple-selection operation refers to a selection operation performed by the user for at least two icons on a user interface simultaneously; creating, by the terminal, a new folder on the user interface according to the multiple-selection operation; and placing, by the terminal, the at least two icons selected simultaneously by the user on the user interface into the new folder.

## Description

### CROSS-REFERENCE TO RELATED APPLICATION

This application claims priority to Chinese Patent Application No. CN 201210204458.X, filed with the Chinese Patent Office on June 20, 2012 and entitled "METHOD AND TERMINAL FOR CREATING FOLDER ON USER INTERFACE", which is incorporated herein by reference in its entirety.

### TECHNICAL FIELD

The present invention relates to the field of communications, and in particular, to a method and a terminal for creating a folder on a user interface.

### BACKGROUND

With rapid popularization of terminals, various applications loaded on the terminals are increasing. To better help users manage various applications on the terminals, different management manners of the terminals are put forward. A most frequently used management manner is a folder management manner.

Currently, in the prior art, a manner of creating a folder on a terminal to manage various applications is: On a display screen of the terminal, various applications are laid out and arranged in a grid manner; a user drags one application icon to another application icon to cause the two application icons to overlap; and, when the dragged application icon reaches the other application icon, if a distance from a center point of the dragged application icon to a center point of the new application icon is less than a preset threshold, a folder is formed, and the terminal names the new folder automatically.

Disadvantages of the prior art are: When a touchscreen of the terminal is large and the user has multiple application icons, if the application icons need to be collated, because the user can only touch each application icon and drag it, the user needs to keep dragging the applications and keep repeating the same action, which leads to very low efficiency of collation; moreover, when the touchscreen of the mobile terminal is large, a drag error tends to occur when the user drags one application icon to another application icon, and two application icons of different types tend to overlap to form an erroneous folder.

### SUMMARY

Objectives of embodiments of the present invention are to solve problems of low management efficiency and tending to form an erroneous folder in the prior art, and to provide a method and a terminal for creating a folder on a user interface.

According to a first aspect, an embodiment of the present invention provides a method for creating a folder on a user interface, where the method includes:
receiving, by a terminal, a multiple-selection operation of a user, where the multiple-selection operation refers to a selection operation performed by the user for at least two icons on a user interface simultaneously;
creating, by the terminal, a new folder on the user interface according to the multiple-selection operation; and
placing, by the terminal, the at least two icons selected simultaneously by the user on the user interface into the new folder.

According to a second aspect, an embodiment of the present invention provides a terminal, including a display, a receiver, a processor, and a memory, where:
the display is configured to display a user interface;
the receiver is configured to receive a multiple-selection operation of a user, and transmit the multiple-selection operation to the processor, where the multiple-selection operation refers to a selection operation performed by the user for at least two icons on the user interface simultaneously; and
the processor is configured to receive the multiple-selection operation, create a new folder on the memory according to the multiple-selection operation, place the at least two icons selected simultaneously by the user on the user interface into the new folder, and display the new folder on the user interface on the display.

According to the method and the terminal for creating a folder on a user interface that are disclosed in the embodiments of the present invention, a terminal receives a multiple-selection operation performed simultaneously by a user for at least two icons, and creates a new folder according to the user operation. Because the terminal can receive the selection operation performed simultaneously by the user for at least two icons, compared with the prior art, the user efficiency of managing applications is effectively improved and the probability of creating erroneous folders is reduced.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

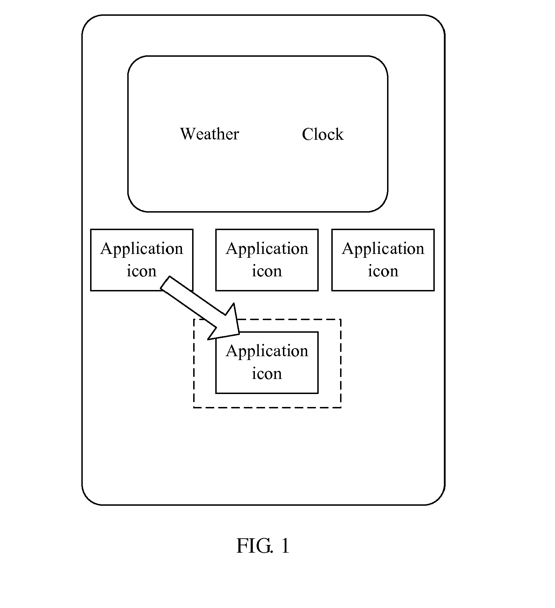

FIG. 1 is a schematic diagram of creating a folder in the prior art;
FIG. 2 is a flowchart of a method for creating a folder on a user interface according to an embodiment of the present invention;
FIG. 3 is a specific flowchart of a method for creating a folder on a user interface according to an embodiment of the present invention;
FIG. 4 is a schematic diagram of displaying multiple icons on a user interface according to an embodiment of the present invention;
FIG. 5 is a schematic diagram of a multiple-selection hold-down operation of a user according to an embodiment of the present invention;
FIG. 6 is a schematic diagram of a multiple-selection drag operation of a user according to an embodiment of the present invention;
FIG. 7 is a schematic diagram of inputting a folder name as prompted according to an embodiment of the present invention;
FIG. 8 is a schematic diagram of saving a folder according to an embodiment of the present invention;
FIG. 9 is a schematic diagram of displaying a folder according to an embodiment of the present invention; and
FIG. 10 is an apparatus diagram of a terminal according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

To facilitate understanding of the embodiments of the present invention, the following further describes specific embodiments of the present invention with reference to accompanying drawings. The embodiments do not constitute any limitation to the embodiments of the present invention.

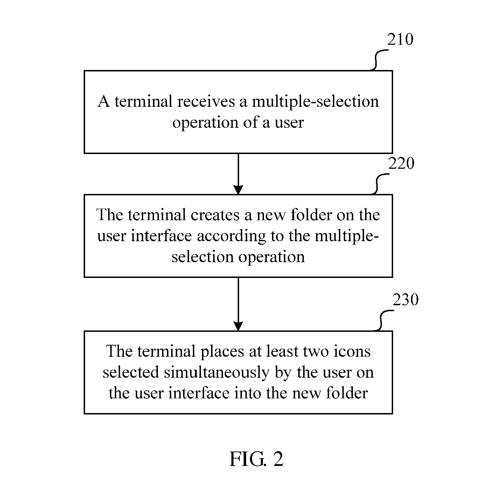

FIG. 2 is used as an example to describe a method for creating a folder on a user interface according to an embodiment of the present invention. FIG. 2 is a flowchart of a method for creating a folder on a user interface according to an embodiment of the present invention.

On a user interface of a terminal, multiple icons may exist, for example, many types of icons such as application icons (SinaGo, NetEase News, and BBC News), picture icons, or thumbnail icons. To better describe the embodiment of the present invention, the following description uses application icons as an example. The user interface of the terminal is flooded with so many icons, which seriously affects the user in management and use of the terminal. In the embodiment of the present invention, on the user interface of the terminal, the user selects at least two icons, and holds down the two icons with fingers simultaneously. After receiving a multiple-selection operation generated when the user touches the icons, the terminal creates, on the user interface according to the multiple-selection operation, a new folder for the multiple icons selected by the user. As shown in FIG. 2, specific implementation steps are as follows:
Step 210: A terminal receives a multiple-selection operation of a user.

Specifically, the user interface of the terminal displays multiple application icons such as SinaGo, NetEase News, and BBC News. In the embodiment of the present invention, on the user interface of the terminal, the user selects at least two icons simultaneously. For example, while the user holds down a first icon with a finger to generate a first selection operation signal, the user holds down a second icon with a finger to generate a second selection operation signal.

Step 220: The terminal creates a new folder on the user interface according to the multiple-selection operation.

Specifically, after the terminal receives a multiple-selection operation signal generated when the user makes a selection, the terminal creates a new folder on the user interface according to the received operation signal.

Step 230: The terminal places at least two icons selected simultaneously by the user on the user interface into the new folder.

Specifically, according to description in step 220, if the terminal receives an operation signal generated when the user selects at least two icons simultaneously, the terminal creates a new folder for the at least two icons selected by the user, and, at the same time, places the at least two icons selected by the user into the new folder.

According to the method for creating a folder on a user interface that is disclosed in the embodiment of the present invention, a terminal receives a multiple-selection operation performed simultaneously by a user for at least two icons, and creates a new folder according to the user operation. Because the terminal can receive the selection operation performed simultaneously by the user for at least two icons, compared with the prior art, the user efficiency of managing applications is effectively improved and the probability of creating erroneous folders is reduced.

To facilitate understanding of the embodiments of the present invention, the following further describes specific embodiments of the present invention with reference to accompanying drawings. It should be noted that the embodiments do not constitute any limitation to the embodiments of the present invention.

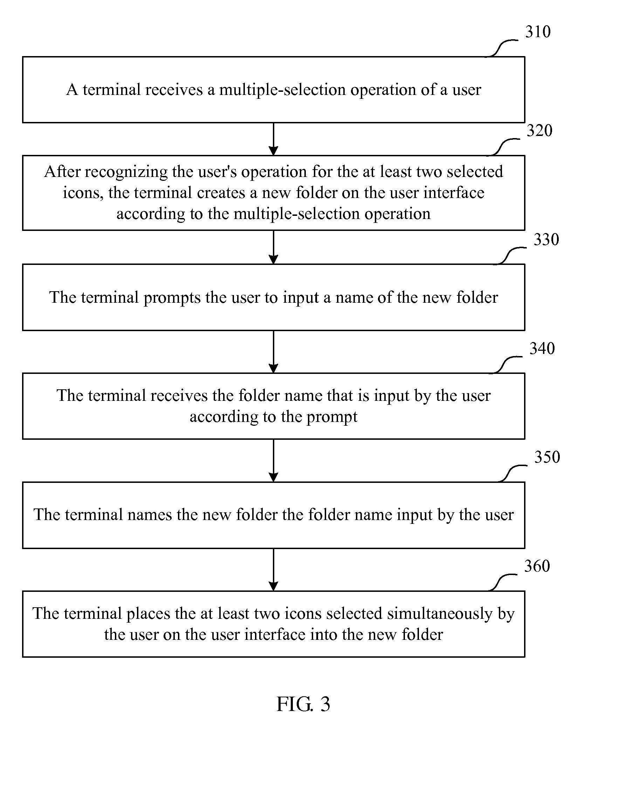

FIG. 3 shows another method embodiment of the present invention, and a method for creating a folder on a user interface according to an embodiment of the present invention is described in the following in detail with reference to FIG. 3.

On a user interface of a terminal, multiple application icons may exist, for example, SinaGo, NetEase News, and BBC News. The user interface of the terminal is flooded with so many icons, which seriously affects the user in management and use of the terminal. In the embodiment of the present invention, on the user interface of the terminal, the user selects at least two icons, and holds down the two icons with fingers simultaneously. After receiving a multiple-selection operation generated when the user touches the icons, the terminal creates, on the user interface according to the multiple-selection operation, a new folder for the multiple icons selected by the user. As shown in FIG. 3, specific implementation steps are as follows:

Step 310: A terminal receives a multiple-selection operation of a user.

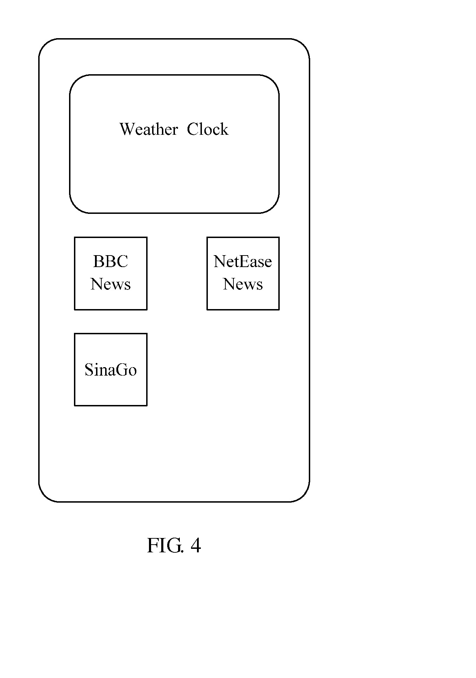

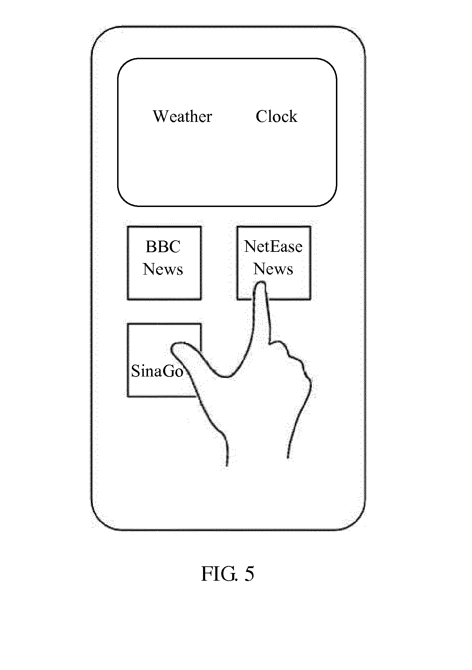

Specifically, as shown in FIG. 4, the user interface of the terminal displays multiple application icons such as SinaGo, NetEase News, and BBC News. In the embodiment of the present invention, on the user interface of the terminal, the user selects at least two icons simultaneously. For example, as shown in FIG. 5, while the user holds down a first icon SinaGo with a finger to generate a first selection operation signal, the user holds down a second icon NetEase News with a finger to generate a second selection operation signal.

It should be noted that the multiple-selection operation of the user may be a hold-down operation performed by the user for the at least two icons simultaneously, where the hold-down operation refers to holding down the at least two icons for a time that is not less than a first time threshold. Specifically, after the user selects, on the user interface of the terminal, at least two icons expected to be placed into the new folder, the user may hold down the at least two selected icons. The terminal recognizes a time value indicating how long the user is holding down the at least two selected icons, and compares the time value indicating how long the user is holding down the at least two selected icons with a preset first time threshold. If the time value indicating how long the user is holding down the at least two selected icons is not less than the preset first time threshold, the terminal recognizes that the user operation is a multiple-selection operation for the at least two icons. For example, the user may select two application icons: SinaGo and NetEase News. As shown in FIG. 5, if the time value indicating how long the user is holding down the at least two selected application icons SinaGo and NetEase News is not less than the preset first time threshold, the terminal recognizes that the user operation is a multiple-selection operation for the at least two application icons.

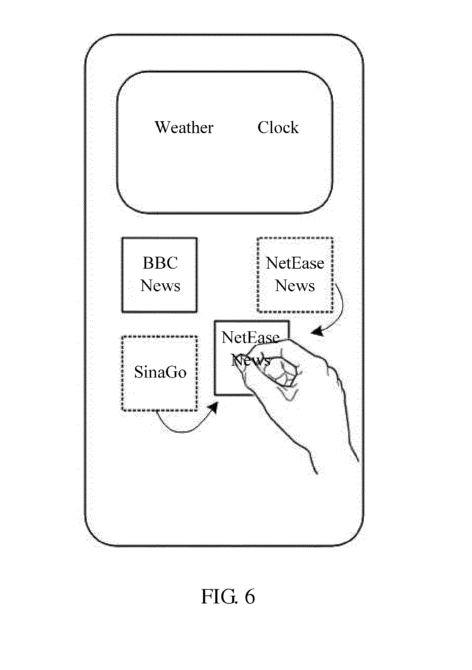

In addition, the multiple-selection operation of the user may also be: The user drags the at least two selected icons together. After recognizing the action of the user of dragging the at least two selected icons together, the terminal compares an overlap region between the at least two dragged icons with a preset first area threshold. If the overlap region between the at least two dragged icons is not less than the preset first area threshold, the terminal recognizes that the user operation is a multiple-selection operation for the at least two icons. For example, in the embodiment of the present invention, as shown in FIG. 6, the user selects two application icons SinaGo and NetEase News. If an overlap region between the two dragged application icons SinaGo and NetEase News is not less than a preset first area threshold, the terminal recognizes that the user operation is a multiple-selection operation for the at least two application icons.

Step 320: After recognizing the operation of the user for the at least two selected icons, the terminal creates a new folder on the user interface according to the multiple-selection operation.

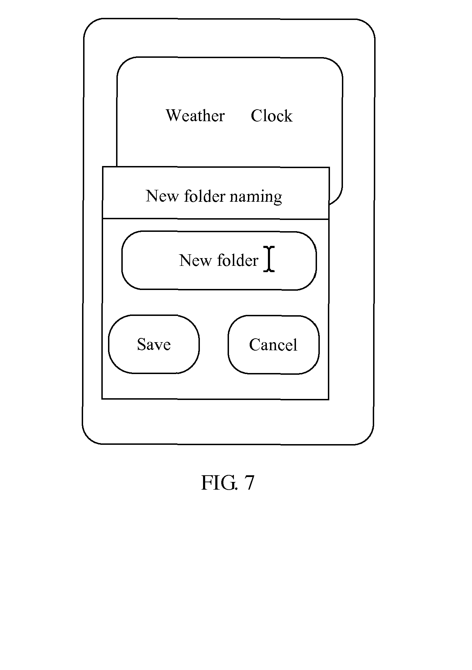

According to the example in step 310, the terminal creates a new folder for the two application icons SinaGo and NetEase News selected by the user, as shown in FIG. 7.

Step 330: The terminal prompts the user to input a name of the new folder.

Specifically, as shown in FIG. 7, according to the description in step 320, after the terminal creates a new folder for the at least two icons selected by the user, a new folder naming prompt box pops up on the terminal. The prompt box prompts the user to input a name of the new folder. The prompt box may display a default name of the folder such as "new folder", a save button, and a cancel button.

Step 340: The terminal receives the folder name that is input by the user according to the prompt.

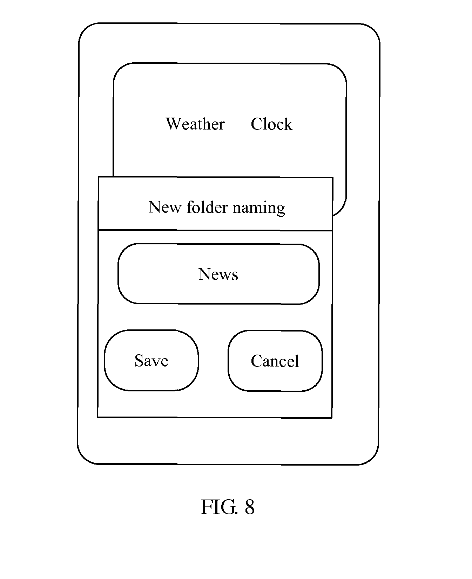

For example, for the example provided in the foregoing steps, the user may input "news" in a dialog box as the name of the new folder according to a common feature of the two application icons SinaGo and NetEase News. The terminal receives the folder name input by the user and displays the name, as shown in FIG. 8.

Step 350: The terminal names the new folder the folder name input by the user.

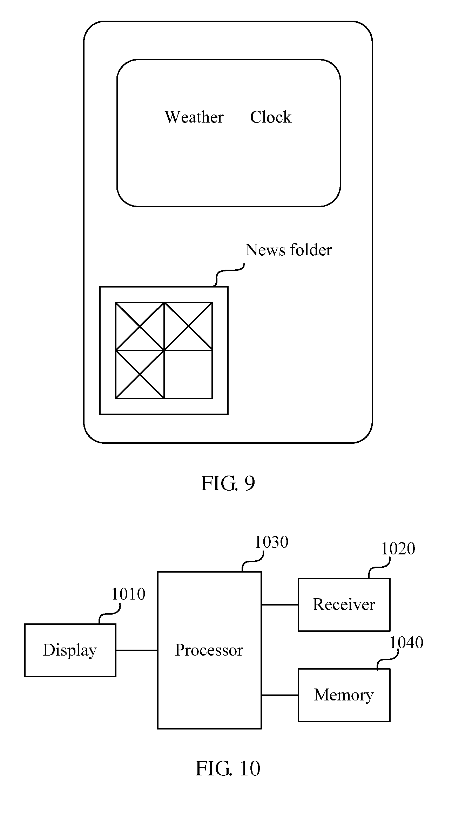

Specifically, after receiving the folder name input by the user, the terminal uses the name input by the user as the name of the new folder, and displays the name, as shown in FIG. 9.

Step 360: The terminal places the at least two icons selected simultaneously by the user on the user interface into the new folder.

Specifically, this step may occur after step 350, or occur between step 320 and step 330, or occur anytime after the terminal creates the new folder and before the new folder is displayed to the user, which is not limited in the embodiment of the present invention.

In addition, it should be noted that according to the recognizing in step 310, if the time value indicating how long the user is holding down the at least two selected icons is less than the preset first time threshold, or if the overlap region between the at least two dragged application icons is less than the preset first area threshold, the terminal does not determine that the user operation is a multiple-selection operation for the at least two icons, and does not create a new folder, and the icons selected by the user remain unchanged.

According to the method for creating a folder on a user interface that is disclosed in the embodiment of the present invention, a terminal receives a multiple-selection operation performed simultaneously by a user for at least two icons, and creates a new folder according to the user operation. Because the terminal can receive the selection operation performed simultaneously by the user for at least two icons, compared with the prior art, the user efficiency of managing applications is effectively improved and the probability of creating erroneous folders is reduced. In addition, in this embodiment, a specific form of the multiple-selection operation of the user is further described, and the user may be prompted to name the new folder, which further enhances the user efficiency of managing applications.

Corresponding to the method for creating a folder on a user interface, the present invention further discloses an embodiment of a terminal. The terminal can implement the embodiments shown in FIG. 2 and FIG. 3, as shown in FIG. 10.

The terminal includes a display 1010, a receiver 1020, a processor 1030, and a memory 1040.

The display 1010 is configured to display a user interface.

The receiver 1020 is configured to receive a multiple-selection operation of a user, and transmit the multiple-selection operation to the processor 1030, where the multiple-selection operation refers to a selection operation performed by the user for at least two icons on the user interface simultaneously.

The processor 1030 is configured to receive the multiple-selection operation, create a new folder on the memory 1040 according to the multiple-selection operation, place the at least two icons selected simultaneously by the user on the user interface into the new folder, and display the new folder on the user interface on the display.

The receiver 1020 is specifically configured to receive a hold-down operation performed by the user for the at least two icons on the user interface, and transmit the received hold-down operation to the processor, where the hold-down operation refers to holding down the at least two icons for a time that is not less than a first time threshold.

The receiver 1020 is specifically configured to receive the operation of the user of dragging the at least two icons on the user interface together, where the dragging refers to holding down the at least two icons simultaneously and moving, and transmit the received moving operation to the processor 830.

Before the processor 1030 displays the new folder on the user interface, the following is further included:
displaying, by the processor 1030, a prompt interface on the user interface on the display, and prompting the user to input a name of the new folder;
receiving, by the receiver 1020, the folder name that is input by the user according to the prompt, and sending the folder name to the processor; and
naming, by the processor 1030, the new folder the folder name input by the user.

The foregoing has described functions of each part in the terminal briefly. The following describes a working process of each part in the terminal in detail. The user interface displayed by the display 1010 displays multiple application icons such as SinaGo, NetEase News, and BBC News. In the embodiment of the present invention, on the user interface, the user selects at least two icons simultaneously. For example, while the user holds down a first icon with a finger to generate a first selection operation signal, the user holds down a second icon with a finger to generate a second selection operation signal.

The receiver 1020 receives a multiple-selection operation of the user, where the multiple-selection operation of the user may be a hold-down operation performed by the user for the at least two icons simultaneously, where the hold-down operation refers to holding down the at least two icons for a time that is not less than a first time threshold. Specifically, after the user selects, on the user interface, at least two icons expected to be placed into the new folder, the user may hold down the at least two selected icons. The receiver 1020 transmits the hold-down operation of the user to the processor 1030. The processor 1030 recognizes a time value indicating how long the user is holding down the at least two selected icons, and compares the time value indicating how long the user is holding down the at least two selected icons with a preset first time threshold. If the time value indicating how long the user is holding down the at least two selected icons is not less than the preset first time threshold, the processor 1030 recognizes that the user operation is a multiple-selection operation for the at least two icons. For example, the user may select two application icons: SinaGo and NetEase News. If a time value indicating how long the user is holding down the two selected application icons SinaGo and NetEase News is not less than a preset first time threshold, the processor 1030 recognizes that the user operation is a multiple-selection operation for the at least two application icons.

In addition, the multiple-selection operation of the user may also be: The user drags the at least two selected icons together. The receiver 1020 receives a drag operation of the user, and transmits the received drag operation to the processor 1030. After recognizing the action of the user of dragging the at least two selected icons together, the processor 1030 compares an overlap region between the at least two dragged icons with a preset first area threshold. If the overlap region between the at least two dragged icons is not less than the preset first area threshold, the processor 1030 recognizes that the user operation is a multiple-selection operation for the at least two icons. For example, in the embodiment of the present invention, the user selects two application icons SinaGo and NetEase News. If an overlap region between the two dragged application icons SinaGo and NetEase News is not less than a preset first area threshold, the processor 1030 recognizes that the user operation is a multiple-selection operation for the at least two application icons.

The processor 1030 creates a new folder on the memory 1040 for the two application icons SinaGo and NetEase News selected by the user.

After the processor 1030 creates a new folder for the at least two icons selected by the user, a new folder naming prompt box pops up. The prompt box prompts the user to input a name of the new folder. The prompt box may display a default name of the folder such as "new folder", a save button, and a cancel button.

For example, for the example provided in the foregoing steps, the user may input "news" in a dialog box as the name of the new folder according to a common feature of the two application icons SinaGo and NetEase News. The receiver 1020 receives the folder name input by the user and displays the name.

After receiving the folder name input by the user, the receiver 1020 sends the received folder name, which is input by the user as prompted, to the processor 1030, and the processor 1030 uses the name input by the user as the name of the new folder, and displays the name.

In addition, it should be noted that, if the time value indicating how long the user is holding down the at least two selected icons is less than the preset first time threshold, or if the overlap region between the at least two dragged application icons is less than the preset first area threshold, the processor 1030 does not determine that the user operation is a multiple-selection operation for the at least two icons, and does not create a new folder, and the application icons selected by the user remain unchanged.

In the apparatus for creating a folder on a user interface that is disclosed in the embodiment of the present invention, a receiver receives a multiple-selection operation performed simultaneously by a user for at least two icons, and transmits the received user operation to a processor. The processor creates a new folder on a memory according to the operation transmitted by the receiver. Because the receiver can receive the selection operation performed simultaneously by the user for at least two icons, compared with the prior art, the user efficiency of managing applications is effectively improved and the probability of creating erroneous folders is reduced. In addition, in this embodiment, a specific form of the multiple-selection operation of the user is further described, and the user may be prompted to name the new folder, which further enhances the user efficiency of managing applications.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

The steps of a method or an algorithm described with reference to the embodiments disclosed in this specification may be implemented by hardware or by a software module executed by a processor, or by a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The objectives, technical solutions, and beneficial effects of the present invention have been described in more detail with reference to the foregoing specific embodiments. Understandably, the foregoing descriptions are merely specific embodiments of the present invention, but are not intended to limit the protection scope of the present invention. Any modification, equivalent substitution, or improvement made within the spirit and principles of the present invention shall fall within the protection scope of the present invention.

## Claims

1. A method for creating a folder on a user interface, wherein the method comprises:
receiving, by a terminal, a multiple-selection operation of a user, wherein the multiple-selection operation refers to a selection operation performed by the user for at least two icons on a user interface simultaneously;
creating, by the terminal, a new folder on the user interface according to the multiple-selection operation; and
placing, by the terminal, the at least two icons selected simultaneously by the user on the user interface into the new folder.

2. The method according to claim 1, wherein the selection operation performed by the user for at least two icons on a user interface simultaneously comprises:
performing, by the user, a hold-down operation for the at least two icons on the user interface, wherein the hold-down operation refers to holding down the at least two icons for a time that is not less than a first time threshold.

3. The method according to claim 1, wherein the selection operation performed by the user for at least two icons on a user interface simultaneously comprises:
dragging, by the user, the at least two icons on the user interface together, wherein the dragging refers to holding down the at least two icons simultaneously and moving so that an overlap region between the at least two icons is not less than a first area threshold.

4. The method according to any one of claims 1 to 3, wherein, after the creating, by the terminal, a new folder on the user interface according to the multiple-selection operation, the method further comprises:
prompting, by the terminal, the user to input a name of the new folder;
receiving, by the terminal, the folder name that is input by the user according to the prompt; and
naming, by the terminal, the new folder the folder name input by the user.

5. A terminal, comprising a display, a receiver, a processor, and a memory, wherein:
the display is configured to display a user interface;
the receiver is configured to receive a multiple-selection operation of a user, and transmit the multiple-selection operation to the processor, wherein the multiple-selection operation refers to a selection operation performed by the user for at least two icons on the user interface simultaneously; and
the processor is configured to receive the multiple-selection operation, create a new folder on the memory according to the multiple-selection operation, place the at least two icons selected simultaneously by the user on the user interface into the new folder, and display the new folder on the user interface on the display.

6. The terminal according to claim 5, wherein the receiver is specifically configured to:
receive a hold-down operation performed by the user for the at least two icons on the user interface, and transmit the received hold-down operation to the processor, wherein the hold-down operation refers to holding down the at least two icons for a time that is not less than a first time threshold.

7. The terminal according to claim 5, wherein the receiver is specifically configured to:
receive the operation of the user of dragging the at least two icons on the user interface together, wherein the dragging refers to holding down the at least two icons simultaneously and moving, and transmit the received moving operation to the processor.

8. The terminal according to any one of claims 5 to 7, wherein, before the processor displays the new folder on the user interface, the following is further comprised:
displaying, by the processor, a prompt interface on the user interface on the display, and prompting the user to input a name of the new folder;
receiving, by the receiver, the folder name that is input by the user according to the prompt, and sending the folder name to the processor; and
naming, by the processor, the new folder the folder name input by the user.
